# EUROPEAN PATENT SPECIFICATION

(11) **EP 0 906 353 B1**
(45) Date of publication and mention of the grant of the patent: **27.06.2001**
(21) Application number: 97927081.6
(22) Date of filing: 30.05.1997
(51) Int. Cl.: C08G 18/42

(54) **RIGID ISOCYANURATE-MODIFIED POLYURETHANE FOAMS**
ISOCYANURATMODIFIZIERTE POLYURETHANHARTSCHAUMSTOFFE
MOUSSES RIGIDES DE POLYURETHANE MODIFIEES PAR DE L'ISOCYANURATE

(30) Priority: 18.06.1996 EP 96201696
(43) Date of publication of application: 07.04.1999
(73) Proprietor: HUNTSMAN INTERNATIONAL LLC, Salt Lake City, Utah 84108 (US)
(72) Inventor: BONAPERSONA, Vittorio, I-21056 In duno Olona (IT); JAVARONE, Cristina, I-21023 Besozzo (IT); MAGNANI, Franco, I-21100 Varese (IT)
(74) Representative: Swinnen, Anne-Marie
(86) International application number: EP9702808
(87) International publication number: WO9748747

(56) References cited:
- EP-A- 0 032 380
- EP-A- 0 472 080
- FR-A- 1 548 298
- US-A- 4 859 523

## Description

This invention relates to rigid isocyanurate-modified polyurethane foams and to processes for their preparation.

Rigid isocyanurate-modified polyurethane foams are in general prepared by reacting a stoichiometric excess of polyisocyanate with isocyanate-reactive compounds in the presence of blowing agents, surfactants and catalysts. One use of such foams is as a thermal insulation medium in, for example, buildings.

Isocyanurate-modified polyurethane foams exhibit better fire retardancy than polyurethane foams in general due to the presence of the isocyanurate groups; however, these foams tend to be extremely friable leading to a deterioration of other properties such as surface cure and adhesion. To obtain good fire properties polyester polyols are advantageously used as isocyanate-reactive compounds in the making of isocyanurate-modified polyurethane foams. Usually these polyester polyols are of aromatic nature and are, in some cases, used in combination with polyether polyols.

Therefore it is an object of the present invention to provide rigid isocyanurate-modified polyurethane foams having a combination of desirable properties, including an appropriate reactivity profile and a reduced friability.

According to the present invention rigid isocyanurate-modified polyurethane foams are provided formed by reacting in the absence of polymer dispersions an organic polyisocyanate composition with an isocyanate-reactive composition at an isocyanate index of 180 to 380 -, preferably 200 to 270 %, most preferably 220 to 250 %, wherein the isocyanate-reactive composition comprises an aliphatic polyester polyol having an aromaticity of below 50 % by weight and an aromatic polyester polyol having an aromaticity of at least 50 % by weight, the weight ratio of aromatic and aliphatic polyester polyol being between 90:10 and 20:80.

The isocyanurate-modified polyurethane foams of the present invention are less friable than those of the prior art made from aromatic polyester polyols only, yielding improved physical properties such as surface cure and adhesion.
They are especially useful in making building panels where the foam is applied to one or more incombustible skins.

US 4302551 describes the use of polymer dispersions in the manufacture of rigid polyisocyanurate foams. These polymer dispersions comprise a continuous phase and a dispersed pnase; as the continuous phase polyester polyols can be used. The present invention is not carried out by using polymer dispersions.
US 4859523 describes the use of aromatic polyester polyols together with aliphatic polyester polyols in the manufacture of viscoelastic resins (thus not rigid polyisocyanurate foams).
FR 1548298 relates to the use of mixtures of aliphatic and aromatic polyester polyols in the manufacture of thermoplastic polyester-urethanes (thus not rigid polyisocyanurate foams).

The term isocyanate index as used herein is meant to be the molar ratio of NCO-groups over reactive hydrogen atoms present in the foam formulation, except for those derived from any water present, given as a percentage.

The polyester polyols for use in the present invention advantageously have an average functionality of 1.8 to 8, preferably 1.8 to 5 and more preferably 2 to 2.5. Their hydroxyl number values generally fall within a range of 15 to 750, preferably 30 to 550 and more preferably 200 to 550 mg KOH/g. Preferably the polyester polyols have an acid number between 0.1 and 20 mg KOH/g; in general the acid number can be as high as 90 mg KOH/g.

The polyester polyols of the present invention can be prepared by known procedures from a polycarboxylic acid or acid derivative, such as an anhydride or ester of the polycarboxylic acid, and any polyol component. The polyacid and/or polyol components may be used as mixtures of two or more compounds in the preparation of the polyester polyols.

The polyols can be aliphatic, cycloaliphatic, aromatic and/or heterocyclic. Low molecular weight aliphatic polyhydric alcohols, such as aliphatic dihydric alcohols having no more than about 20 carbon atoms are highly satisfactory. The polyols optionally may include substituents which are inert in the reaction, for example, chlorine and bromine substituents, and/or may be unsaturated. Suitable amino alcohols, such as, for example, monoethanolamine, diethanolamine, or triethanolamine may also be used. A preferred polyol component is a glycol. The glycols may contain heteroatoms (e.g., thiodiglycol) or may be composed solely of carbon, hydrogen and oxygen. They are advantageously simple glycols of the general formula CₙH₂ₙ(OH)₂ or polyglycols distinguished by intervening ether linkages in the hydrocarbon chain, as represented by the general formula CₙH₂ₙOₓ(OH)₂. Examples of suitable polyhydric alcohols include: ethylene glycol, propylene glycol -(1,2) and -(1,3), butylene glycol -(1,4) and -(2,3), hexanediol - (1,6), octanediol -(1,8), neopentyl glycol, 1,4-bishydroxymethyl cyclohexane, 2-methyl-1,3-propane diol, glycerin, trimethylolethane, hexanetriol -(1,2,6), butanetriol -(1,2,4), quinol, methyl glucoside, triethyleneglycol, tetraethylene glycol and higher polyethylene glycols, dipropylene glycol and higher polypropylene glycols, diethylene glycol, glycerol, pentaerythritol, trimethylolpropane, sorbitol, mannitol, dibutylene glycol and higher polybutylene glycols. Especially suitable polyols are alkylene glycols and oxyalkylene glycols, such as ethylene glycol, diethylene glycol, dipropylene glycol, triethylene glycol, tripropylene glycol, tetraethylene glycol, tetrapropylene glycol, trimethylene glycol, tetramethylene glycol and 1,4-cyclohexanedimethanol (1,4-bis-hydroxymethylcyclohexane).

The polycarboxylic acid component may be aliphatic, cycloaliphatic, aromatic and/or heterocyclic and may optionally be substituted, for example, by halogen atoms and/or may be unsaturated. Examples of suitable carboxylic acids and derivatives thereof for the preparation of the polyester polyols include: oxalic acid, malonic acid, adipic acid, glutaric acid, succinic acid, pimelic acid, suberic acid, azelaic acid, sebacic acid, phthalic acid, phthalic acid anhydride, terephthalic anhydride, isophthalic acid, terephthalic acid, trimellitic acid, tetrahydrophthalic acid anhydride, pyromellitic dianhydride, hexahydrophthalic acid anhydride, tetrachlorophthalic acid anhydride, endomethylene tetrahydrophthalic anhydride, glutaric acid anhydride, maleic acid, maleic acid anhydride, terephthalic acid dimethylester, terephthalic acid-bis glycol ester, fumaric acid, dibasic and tribasic unsaturated fatty acids optionally mixed with monobasic unsaturated fatty acids, such as oleic acids.
While the polyester polyols can be prepared from substantially pure reactant materials, more complex ingredients can be used, such as the side-stream, waste or scrap residues from the manufacture of phthalic acid, terephthalic acid, dimethyl terephthalate, polyethylene terephthalate, and the like. These compositions can be converted by reaction with polyols to polyester polyols through conventional transesterification or esterification procedures.

The production of the polyester polyols is accomplished by simply reacting the polycarboxylic acid or acid derivative with the polyol component in a known manner until the hydroxyl and acid values of the reaction mixture fall in the desired range. After transesterification or esterification the reaction product can optionally be reacted with an alkylene oxide.

The term "polyester polyol" as used herein includes any minor amounts of unreacted polyol remaining after the preparation of the polyester polyol and/or unesterified polyol (e.g., glycol) added after the preparation. The polyester polyol can advantageously include up to about 40 % by weight free glycol. Preferably the free glycol content is from 2 to 30, more preferably from 2 to 15 % by weight of the total polyester polyol component.

In the aliphatic polyester polyol both the polyol and the polycarboxylic acid used to make the polyester polyol are aliphatic compounds. However some of the polyol or the polycarboxylic acid may be of aromatic nature; the aromaticity of the aliphatic polyester polyol (expressed as weight % of groups containing at least one aromatic ring per molecule) being below 50 %.
In the aromatic polyester polyol at least one of the polyol or the polycarboxylic acid, preferably the acid, is an aromatic compound and the aromaticity is at least 50 %. Polyester polyols whose acid component advantageously comprises at least 30 % by weight of phthalic acid (or isomers thereof) residues are particularly useful. Preferably the aromaticity of the aromatic polyester polyol is between 70 and 90 %.
Preferred aromatic polyester polyols are the crude polyester polyols obtained by the transesterification of crude reaction residues or scrap polyester resins.

One or more different aromatic and one or more different aliphatic polyester polyols may be used according to the present invention.
The weight ratio of aromatic and aliphatic polyester polyols to be used in the present invention is between 90:10 and 20:80, preferably between 80:20 and 30:70, more preferably between 80:20 and 40:60.

For the production of the isocyanurate-modified polyurethane foams of the present invention the polyester polyols described above preferably constitute the totality of the reactive mixture reacted with the polyisocyanate; it is understood, however, that these polyols could also be used mixed with other isocyanate-reactive compounds conventionally used in the art; preferably the isocyanate-reactive composition includes at least 90 % by weight of the polyester polyols described above.

The isocyanate-reactive compounds which can be employed in combination with the polyester polyols in the preparation of the isocyanurate-modified polyurethane foams of the present invention include any of those known in the art for that purpose. Of particular importance for the preparation of rigid foams are polyols and polyol mixtures having average hydroxyl numbers of from 300 to 1000, especially from 300 to 700 mg KOH/g, and hydroxyl functionalities of from 2 to 8, especially from 3 to 8. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine, diaminodiphenylmethane and polymethylene polyphenylene polyamines; and aminoalcohols, for example ethanolamine and diethanolamine; and mixtures of such initiators. Further suitable polymeric polyols include hydroxyl terminated polythioethers, polyamides, polyesteramides, polycarbonates, polyacetals, polyolefins and polysiloxanes.

Suitable organic polyisocyanates for use in the process of the present invention include any of those known in the art for the preparation of rigid isocyanurate-modified polyurethane foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane. Further suitable polyisocyanates for use in the process of the present invention are those described in EP-A-0320134.
Modified polyisocyanates, such as carbodiimide or uretonimine modified polyisocyanates can also be employed.
Still other useful organic polyisocyanates are isocyanate-terminated prepolymers prepared by reacting excess organic polyisocyanate with a minor amount of an active hydrogen-containing compound.
Preferred polyisocyanates to be used in the present invention are the polymeric MDI's.

The quantities of the polyisocyanate composition and the polyfunctional isocyanate-reactive composition to be reacted are such that the molar ratio of isocyanate (NCO) groups to active-hydrogen groups (OH) (excluding water) is generally between 180 and 380 %, preferably between 200 and 270 % and most preferably between 220 and 250 %.

The process of the present invention is carried out in the presence of any of the blowing agents known in the art for the preparation of rigid isocyanurate-modified polyurethane foams. Such blowing agents include water or other carbon dioxide-evolving compounds, or inert low boiling compounds having a boiling point of above -70°C at atmospheric pressure.

Where water is used as blowing agent, the amount may be selected in known manner to provide foams of the desired density, typical amounts being in the range from 0.05 to 5 % by weight based on the total reaction system.

Suitable inert blowing agents include those well known and described in the art, for example, hydrocarbons, dialkyl ethers, alkyl alkanoates, aliphatic and cycloaliphatic hydrofluorocarbons, hydrochlorofluorocarbons, chlorofluorocarbons, hydrochlorocarbons and fluorine-containing ethers.

Examples of preferred blowing agents include isobutane, n-pentane, isopentane, cyclopentane or mixtures thereof, 1,1-dichloro-2-fluoroethane (HCFC 141b), 1,1,1-trifluoro-2-fluoroethane (HFC 134a), chlorodifluoromethane (HCFC 22), 1,1-difluoro-3,3,3-trifluoropropane (HFC 245fa) and blends thereof. Particular mention may be made of blowing agent mixtures as described in WO 96/12758 for manufacturing low density, dimensionally stable rigid foam. These blowing agent mixtures generally comprise at least 3 and preferably at least 4 components of which preferably at least one is a (cyclo)alkane (preferably of 5 or 6 carbon atoms) and/or acetone.

The blowing agents are employed in an amount sufficient to give the resultant foam the desired bulk density which is generally in the range 15 to 70 kg/m³, preferably 20 to 50 kg/m³, most preferably 25 to 40 kg/m³. Typical amounts of blowing agents are in the range 2 to 25 % by weight based on the total reaction system.

When a blowing agent has a boiling point at or below ambient it is maintained under pressure until mixed with the other components. Alternatively, it can be maintained at subambient temperatures until mixed with the other components.

In addition to the polyisocyanate and polyfunctional isocyanate-reactive compositions and the blowing agent, the foam-forming reaction mixture will commonly contain one or more other auxiliaries or additives conventional to formulations for the production of rigid isocyanurate-modified polyurethane foams. Such optional additives include crosslinking agents, for examples low molecular weight polyols such as triethanolamine, processing aids, viscosity reducers, dispersing agents, plasticizers, mold release agents, antioxidants, fillers (e.g. carbon black), cell size regulators such as insoluble fluorinated compounds (as described, for example, in US 4981879, US 5034424, US 4972002, EP 0508649, EP 0498628, WO 95/18176), catalysts, surfactants such as polydimethylsiloxane-polyoxyalkylene block copolymers and non-reactive and reactive fire retardants, for example halogenated alkyl phosphates such as tris chloropropyl phosphate, triethylphosphate, diethylethylphosphonate and dimethylmethylphosphonate. The use of such additives is well known to those skilled in the art.

Catalysts to be used in the present invention include those which promote the isocyanurate formation. Examples include alkali metal or alkaline earth metal salts of carboxylic acids. The cation of the organic acid metal salt, which is preferably an alkali metal salt, advantageously is K or Na, more preferably K. Particularly preferred are C₁-C₈ carboxylate salts, including the sodium and potassium salts of formic, acetic, propionic and 2-ethylhexanoic acids.
Other suitable trimerisation catalysts include triazine compounds such as Polycat 41 (available from Air Products) and quaternary ammonium carboxylate salts.
Catalyst combinations can be used as well such as described in EP 228230 and GB 2288182; including combinations with urethane catalysts which promote the reaction between an isocyanate group and an active hydrogen-containing group such as tertiary amines.

In operating the process for making rigid foams according to the invention, the known one-shot, prepolymer or semi-prepolymer techniques may be used together with conventional mixing methods and the rigid foam may be produced in the form of slabstock, mouldings, cavity fillings, sprayed foam, frothed foam or laminates with other materials such as hardboard, plasterboard, plastics, paper or metal.

It is common practice in the manufacture of rigid polyurethane foams to utilize two preformulated compositions, commonly called the A-component and the B-component. Typically, the A-component contains the polyisocyanate compound and the B-component contains the polyols together with the blowing agents, catalysts and other auxiliaries.

The foams of the present invention are advantageously used for producing laminates whereby the foam is provided on one or both sides with a facing sheet. The laminates are advantageously made in a continuous manner by depositing the foam-forming mixture on a facing sheet being conveyed along a production line, and preferably placing another facing sheet on the deposited mixture. Any facing sheet previously employed to produce building panels can be employed and can be of a rigid or flexible nature.

The various aspects of this invention are illustrated, but not limited by the following examples in which the following ingredients are used:
DALTOLAC P 710: an aliphatic polyester polyol (aromaticity 28 %) available from Imperial Chemical Industries-.
STEPANPOL PS 2502A: an aromatic polyester polyol (aromaticity 75 %) available from Stepan.
Isoexter 4537: an aliphatic polyester polyol available from COIM.
DALTOLAC R105: a polyether polyol available from Imperial Chemical Industries.
Isoexter 4565: an aliphatic polyester polyol available from COIM.
DALTOLAC P744: an aliphatic polyester polyol available from Imperial Chemical Industries.
Terate 203: an aromatic polyester polyol (aromaticity 89 %) available from Hoechst Celanese.
Terate 2541: an aromatic polyester polyol (aromaticity 78 %) available from Hoechst Celanese.
TCPP: tris chloropropyl phosphate, a fire retardant available from Courtalds.
Polycat 43: a catalyst available from Air Products.
L6900: a silicone surfactant available from OSI.
Niax A1 : a catalyst available from OSI.
Catalyst LB: a catalyst available from Imperial Chemical Industries.
Polycat 8: a catalyst available from Air Products.
DMEA: a catalyst available from Imperial Chemical Industries.
SUPRASEC 2085: a polymeric MDI available from Imperial Chemical Industries.
SUPRASEC and DALTOLAC are trademarks of Imperial Chemical Industries.

### EXAMPLE 1

Rigid foams were prepared from the ingredients listed below in Table 1.
The reaction profile was followed in respect of cream time, string time and tack free time. Free rise density was determined (according to standard DIN 53420). The surface friability of the obtained foams was checked visually. Facing adhesion was measured acoording to standard ASTM D162. Paper peel adhesion was evaluated qualitatively with 100 g/m² paper; 1 meaning good (paper break), 2 meaning medium peeling requiring some strength, 3 meaning poor (peeling is very easy).
The results are presented in Table 1 below.

These results show that using aliphatic polyester polyols in addition to aromatic polyester polyols reduces the friability of the obtained foams and improves the adhesion.

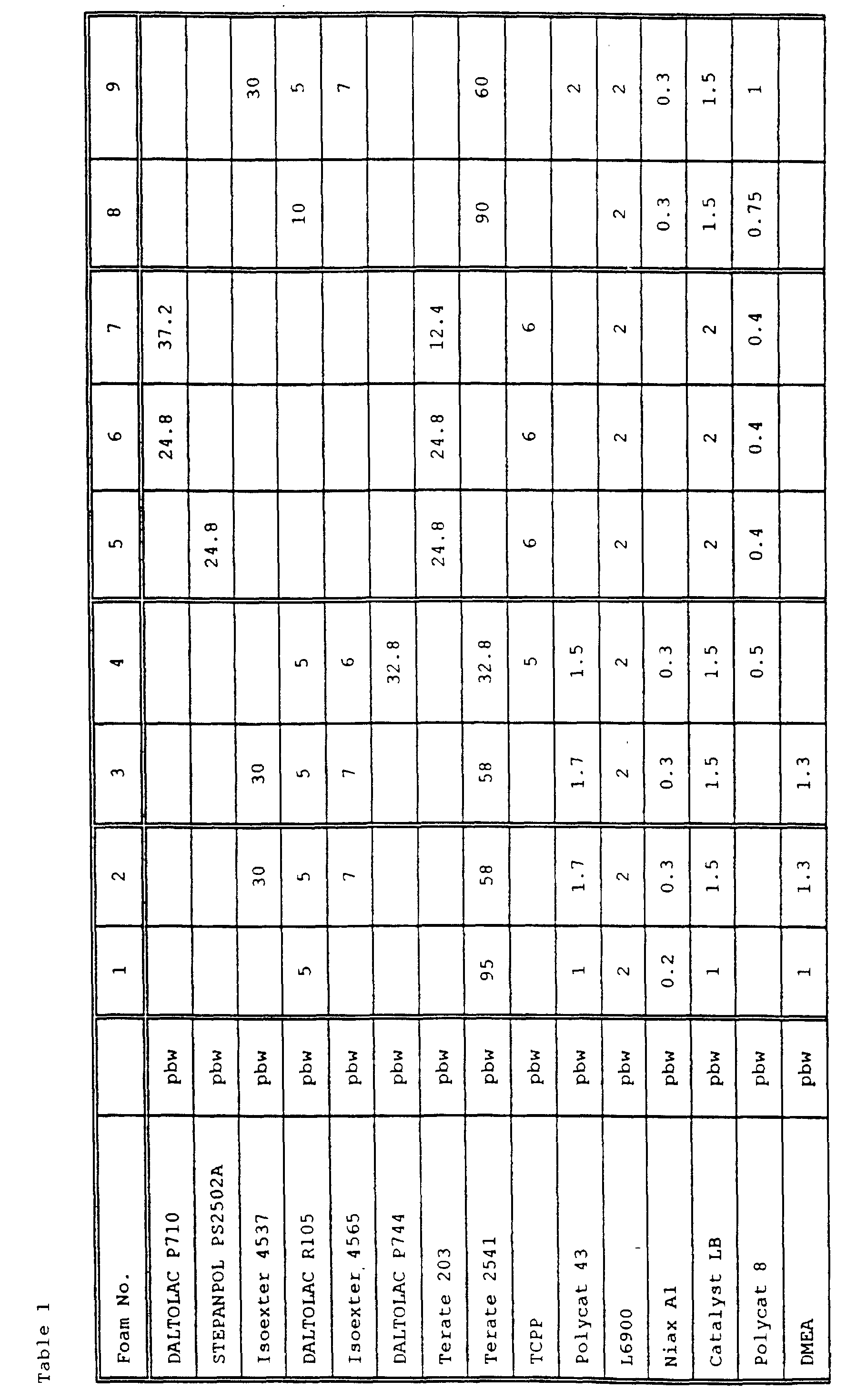

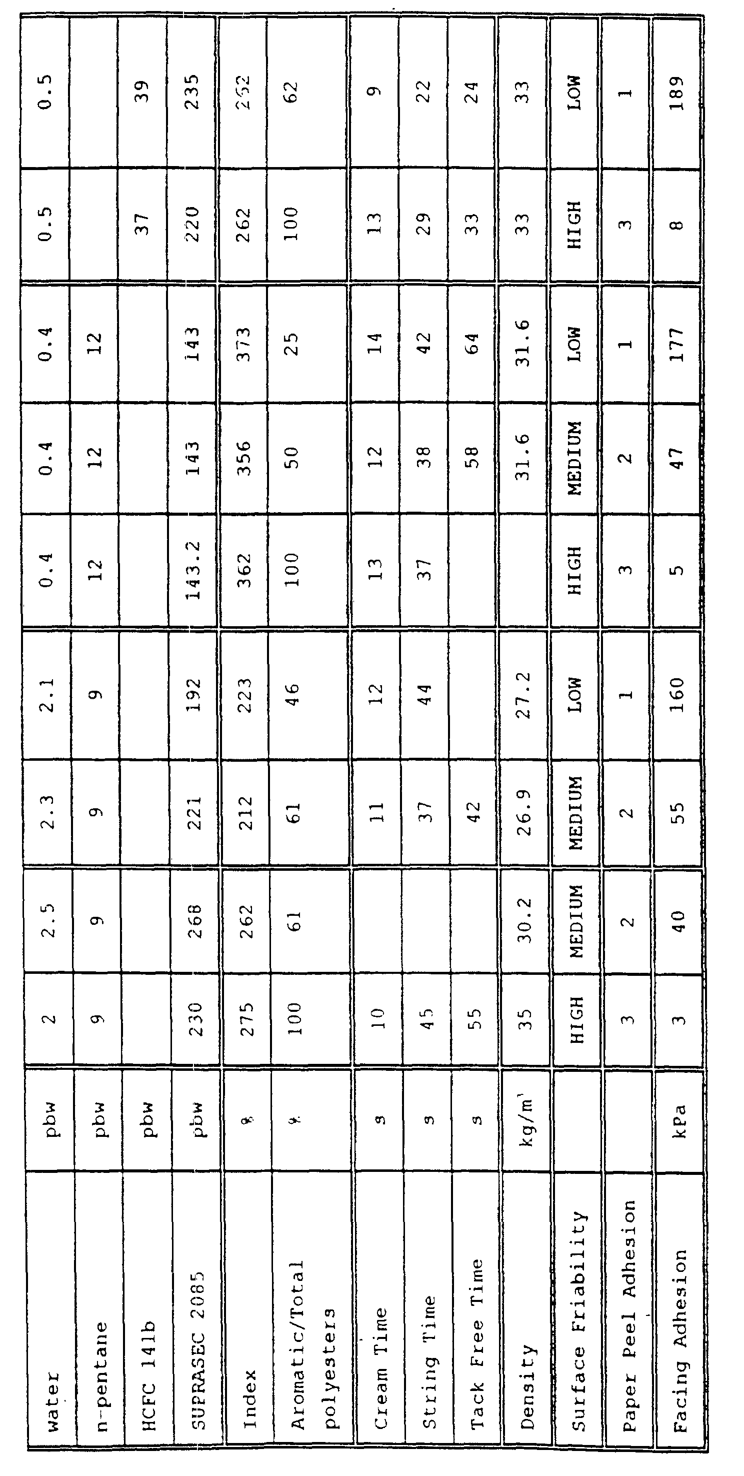

## Claims

1. Process for making rigid isocyanurate-modified polyurethane foams comprising the step of reacting an organic polyisocyanate composition with an isocyanate-reactive composition at an isocyanate index of 180 to 380 % in the presence of a blowing agent, characterised in that the isocyanate-reactive composition comprises an aliphatic polyester polyol having an aromaticity of below 50 % by weight (expressed as weight % of groups containing at least one aromatic ring per molecule) and an aromatic polyester polyol having an aromaticity of at least 50 % by weight, the weight ratio of aromatic and aliphatic polyester polyol being between 90:10 and 20:80 and that the process is carried out in the absence of polymer dispersions.

2. Process according to claim 1 wherein the isocyanate index is between 200 and 270 %.

3. Process according to claim 2 wherein the isocyanate index is between 220 and 250 %.

4. Process according to any one of the preceding claims wherein the polyester polyols have an average functionality of 1.8 to 8 and an hydroxyl value of 15 to 750 mg KOH/g.

5. Process according to any one of the preceding claims wherein the polyester polyols are prepared from a polycarboxylic acid or acid derivative and a polyol.

6. Process according to claim 5 wherein the polyol is a glycol or a polyglycol distinguished by intervening ether linkages in the hydrocarbon chain.

7. Process according to claim 5 or 6 wherein the polycarboxylic acid or acid derivative is selected from the group comprising adipic acid, glutaric acid, succinic acid, phthalic acid and its derivatives (including isophthalic and terephthalic acid) and residues.

8. Process according to claim 5 wherein the polycarboxylic acid used to make the aromatic polyester polyol is of aromatic nature.

9. Process according to any one of the preceding claims wherein the weight ratio of aromatic and aliphatic polyester polyols is between 80:20 and 40:60.

10. Process according to any one of the preceding claims wherein the aromatic and aliphatic polyester polyols constitute at least 90 % by weight of the total isocyanate-reactive compounds.

11. Process according to any one of the preceding claims wherein the organic polyisocyanate is a polymeric MDI.

12. Process according to any one of the preceding claims wherein the blowing agent comprises a hydrocarbon.

13. Process according to claim 12 wherein the blowing agent is n-pentane, isobutane, isopentane, cyclopentane or any mixture thereof.

14. Process according to any one of the preceding claims wherein the reaction is carried out in the presence of a trimerisation catalyst.

15. Rigid isocyanurate-modified polyurethane foam obtainable by the process as defined in any one of the preceding claims.

16. Use of a foam as defined in claim 15 for making laminates.

17. Isocyanate-reactive composition comprising an aliphatic polyester polyol having an aromaticity of below 50 % by weight (expressed as weight % of groups containing at least one aromatic ring per molecule) and an aromatic polyester polyol having an aromaticity of at least 50 % by weight, the weight ratio of aromatic and aliphatic polyester polyol being between 90:10 and 20:80, and not comprising polymer dispersions.

18. Isocyanate-reactive composition according to claim 17 wherein the weight ratio of aromatic and aliphatic polyester polyols is between 80:20 and 40:60.

19. Isocyanate-reactive composition according to claim 17 or 18 wherein the aromatic and aliphatic polyester polyols constitute at least 90 % by weight of the total isocyanate-reactive compounds.

20. Isocyanate-reactive composition according to any one of claims 17 to 19 further comprising a blowing agent.

21. Isocyanate-reactive composition according to any one of claims 17 to 20 further comprising a trimerisation catalyst.

## Patentansprüche

1. Verfahren zur Herstellung isocyanuratmodifizierter Polyurethanhartschaumstoffe, das den Verfahrensschritt der Umsetzung einer organischen Polyisocyanatzusammensetzung mit einer isocyanatreaktiven Zusammensetzung bei einem Isocyanatindex von 180 bis 380 % in der Gegenwart eines Treibmittels umfasst, dadurch gekennzeichnet, dass die isocyanatreaktive Zusammensetzung ein aliphatisches Polyesterpolyol mit einer Aromatizität von unter 50 Gew.-% (ausgedrückt als Gew.-% der Gruppen, die wenigstens einen aromatischen Ring pro Molekül enthalten) und ein aromatisches Polyesterpolyol mit einer Aromatizität von wenigstens 50 Gew.-% umfasst, wobei das Gewichtsverhältnis von aromatischem zu aliphatischem Polyesterpolyol zwischen 90:10 und 20:80 beträgt und das Verfahren in Abwesenheit von Polymerdispersionen ausgeführt wird.

2. Verfahren gemäß Anspruch 1, wobei der Isocyanatindex zwischen 200 und 270 % beträgt.

3. Verfahren gemäß Anspruch 2, wobei der Isocyanatindex zwischen 220 und 250 % beträgt.

4. Verfahren gemäß einem der vorhergehenden Ansprüche, wobei die Polyesterpolyole eine durchschnittliche Funktionalität von 1,8 bis 8 und einen Hydroxylwert von 15 bis 750 mg KOH/g besitzen.

5. Verfahren gemäß einem der vorhergehenden Ansprüche, wobei die Polyesterpolyole aus einer Polycarbonsäure oder Säurederivat und einem Polyol hergestellt sind.

6. Verfahren gemäß Anspruch 5, wobei das Polyol ein Glykol oder ein sich durch dazwischentretende Etherbindungen der Kohlenwasserstoffkette unterscheidendes Polyglykol ist.

7. Verfahren gemäß Anspruch 5 oder 6, wobei die Polycarbonsäure oder das Säurederivat aus der Gruppe ausgewählt ist, die Adipinsäure, Glutarsäure, Succinsäure, Phthalsäure und deren Derivate (einschließlich Isophthal- und Terephthalsäure) und Rückstände umfasst.

8. Verfahren gemäß Anspruch 5, wobei die zur Herstellung des aromatischen Polyesterpolyols verwendete Polycarbonsäure aromatische Natur besitzt.

9. Verfahren gemäß einem der vorhergehenden Ansprüche, wobei das Gewichtsverhältnis des aromatischen zu dem aliphatischen Polyesterpolyol zwischen 80:20 und 40:60 beträgt.

10. Verfahren gemäß einem der vorhergehenden Ansprüche, wobei die aromatischen und aliphatischen Polyesterpolyole wenigstens 90 Gew.-% der gesamten isocyanatreaktiven Verbindungen ausmachen.

11. Verfahren gemäß einem der vorhergehenden Ansprüche, wobei das organische Polyisocyanat ein polymeres MDI ist.

12. Verfahren gemäß einem der vorhergehenden Ansprüche, wobei das Treibmittel einen Kohlenwasserstoff umfasst.

13. Verfahren gemäß Anspruch 12, wobei das Treibmittel n-Pentan, Isobutan, Isopentan, Cyclopentan oder irgendeine Mischung davon ist.

14. Verfahren gemäß einem der vorhergehenden Ansprüche, wobei die Umsetzung in Gegenwart eines Trimerisierungskatalysators ausgeführt wird.

15. Isocyanuratmodifizierter Polyurethanhartschaumstoff, der durch das in einem der vorhergehenden Ansprüche definierte Verfahren erhältlich ist.

16. Verwendung eines in Anspruch 15 definierten Schaumstoffs zur Herstellung von Laminaten.

17. Isocyanatreaktive Zusammensetzung, die ein aliphatisches Polyesterpolyol mit einer Aromatizität von unterhalb 50 Gew.-% (ausgedrückt als Gew.-% der Gruppen, die wenigstens einen aromatischen Ring pro Molekül enthalten) und ein aromatisches Polyesterpolyol mit einer Aromatizität von wenigstens 50 Gew.-% umfasst, wobei das Gewichtsverhältnis von aromatischem zu aliphatischem Polyesterpolyol zwischen 90:10 und 20:80 beträgt, und wobei keine Polymerdispersionen umfasst sind.

18. Isocyanatreaktive Zusammensetzung gemäß Anspruch 17, wobei das Gewichtsverhältnis von aromatischen zu aliphatischen Polyesterpolyolen zwischen 80:20 und 40:60 beträgt.

19. Isocyanatreaktive Zusammensetzung gemäß Anspruch 17 oder 18, wobei die aromatischen und aliphatischen Polyesterpolyole wenigstens 90 Gew.-% der gesamten isocyanatreaktiven Verbindungen ausmachen.

20. Isocyanatreaktive Zusammensetzung gemäß einem der Ansprüche 17 bis 19, die außerdem ein Treibmittel umfasst.

21. Isocyanatreaktive Zusammensetzung gemäß einem der Ansprüche 17 bis 20, die außerdem einen Trimerisierungskatalysator umfasst.

## Revendications

1. Procédé pour la production de mousses rigides de polyuréthanne à modification isocyanurate, comprenant l'étape consistant à faire réagir une composition de polyisocyanate organique avec une composition, réactive avec les isocyanates, à un indice d'isocyanate de 180 à 380 % en présence d'un agent porogène, caractérisé en ce que la composition réactive avec les isocyanates comprend un polyester-polyol aliphatique ayant une aromaticité inférieure à 50 % en poids (exprimée par le pourcentage en poids de groupes contenant au moins un noyau aromatique par molécule) et un polyester-polyol aromatique ayant une aromaticité d'au moins 50 % en poids, le rapport pondéral du polyester-polyol aromatique au polyester-polyol aliphatique étant compris dans l'intervalle de 90:10 à 20:80, et en ce que le procédé est mis en oeuvre en l'absence de dispersions de polymères.

2. Procédé suivant la revendication 1, dans lequel l'indice d'isocyanate est compris dans l'intervalle de 200 à 270 %.

3. Procédé suivant la revendication 2, dans lequel l'indice d'isocyanate est compris dans l'intervalle de 220 à 250 %.

4. Procédé suivant l'une quelconque des revendications précédentes, dans lequel les polyester-polyols ont une fonctionnalité moyenne de 1,8 à 8 et un indice d'hydroxyle de 15 à 750 mg de KOH/g.

5. Procédé suivant l'une quelconque des revendications précédentes, dans lequel les polyester-polyols sont préparés à partir d'un acide ou dérivé d'acide polycarboxylique et d'un polyol.

6. Procédé suivant la revendication 5, dans lequel le polyol est un glycol ou un polyglycol différencié par des liaisons éther intermédiaires dans la chaîne hydrocarbonée.

7. Procédé suivant la revendication 5 ou 6, dans lequel l'acide ou le dérivé d'acide polycarboxylique est choisi dans le groupe comprenant l'acide adipique, l'acide glutarique, l'acide succinique, l'acide phtalique et ses dérivés (comprenant l'acide isophtalique et l'acide téréphtalique) et résidus.

8. Procédé suivant la revendication 5, dans lequel l'acide polycarboxylique utilisé pour préparer le polyester-polyol aromatique est de nature aromatique.

9. Procédé suivant l'une quelconque des revendications précédentes, dans lequel le rapport pondéral du polyester-polyol aromatique au polyester-polyol aliphatique est compris dans l'intervalle de 80:20 à 40:60.

10. Procédé suivant l'une quelconque des revendications précédentes, dans lequel le polyester-polyol aromatique et le polyester-polyol aliphatique constituent au moins 90 % en poids des composés totaux réactifs avec les isocyanates.

11. Procédé suivant l'une quelconque des revendications précédentes, dans lequel le polyisocyanate organique est un MDI polymère.

12. Procédé suivant l'une quelconque des revendications précédentes, dans lequel l'agent porogène comprend un hydrocarbure.

13. Procédé suivant la revendication 12, dans lequel l'agent porogène est le n-pentane, l'isobutane, l'isopentane, le cyclopentane ou n'importe lequel de leurs mélanges.

14. Procédé suivant l'une quelconque des revendications précédentes, dans lequel la réaction est conduite en présence d'un catalyseur de trimérisation.

15. Mousse rigide de polyuréthanne à modification isocyanurate, pouvant être obtenue par le procédé répondant à la définition suivant l'une quelconque des revendications précédentes.

16. Utilisation d'une mousse répondant à la définition suivant la revendication 15 pour la production de stratifiés.

17. Composition réactive avec les isocyanates, comprenant un polyester-polyol aliphatique ayant une aromaticité inférieure à 50 % en poids (exprimée par le pourcentage en poids de groupes contenant au moins un noyau aromatique par molécule) et un polyester-polyol aromatique ayant une aromaticité d'au moins 50 % en poids, le rapport pondéral du polyester-polyol aromatique au polyester-polyol aliphatique étant compris dans l'intervalle de 90:10 à 20:80, et ne comprenant pas de dispersions de polymères.

18. Composition réactive avec les isocyanates suivant la revendication 17, dans laquelle le rapport pondéral du polyester-polyol aromatique au polyester-polyol aliphatique est compris dans l'intervalle de 80:20 à 40:60.

19. Composition réactive avec les isocyanates suivant la revendication 17 ou 18, dans laquelle le polyester-polyol aromatique et le polyester-polyol aliphatique représentent au moins 90 % en poids des composés totaux réactifs avec les isocyanates.

20. Composition réactive avec les isocyanates suivant l'une quelconque des revendications 17 à 19, comprenant en outre un agent porogène.

21. Composition réactive avec les isocyanates suivant l'une quelconque des revendications 17 à 20, comprenant en outre un catalyseur de trimérisation.
